# EUROPEAN PATENT APPLICATION

(11) **EP 1 079 145 A2**
(43) Date of publication of application: **28.02.2001**
(21) Application number: 00307331.9
(22) Date of filing: 25.08.2000
(51) Int. Cl.: F16H 25/22

(54) **Ball Screw**

(30) Priority: 26.08.1999 JP 23978599
(71) Applicant: Fanuc Ltd, Minamitsuru-gun, Yamanashi 401-0597 (JP)
(72) Inventor: Ito, Susumu, Hino-shi, Tokyo, 191-0065 (JP); Nishimura, Koichi, Susono-shi, Shizuoka, 410-1115 (JP)
(74) Representative: Billington, Lawrence Emlyn

(57) **Abstract**

A ball screw capable of reducing metal fatigue of a screw shaft (1) and a nut (2) to have a long life. At least three separate ball trains (4a,4b,4c) each circulating around a screw shaft are intervened between the screw shaft and the nut. Ball diameters of the separate trains are set to vary with a gradient such that the balls (3a,3b,3c) in the separate trains uniformly bear a load on the screw shaft and the nut. By setting diameters of the balls in the peripheral trains smaller than those of the balls in the central train, the load is distributed uniformly over the engaging portions of the screw shaft and the nut and concentration of stress at the peripheral portion of the nut is eliminated. Thus, the screw shaft and the nut are prevented from being damaged by metal fatigue caused by the concentrated stress in a long term usage to elongate a life of the ball screw.

## Description

The present invention relates to a ball screw suitable for use as a feed mechanism for moving a movable part of an industrial machine such as a machine tool, an injection molding machine, etc.

A ball screw is known as a mechanical element for converting rotational motion to linear motion and vice versa to drive a movable part of an industrial machine such as a machine tool and an injection molding machine. The ball screw mechanism has a structure in which steel balls are constrained to circulate in an endless passage formed between a male thread of a screw shaft and a female thread of a nut. Efficiency of conversion between rotational motion and linear motion is improved by the ball intervened between the screw shaft and the nut The balls moves rolling along the passage in a train to circulate around the screw shaft by at least one turn. A ball screw having a plurality of ball trains is well known.

In a typical usage of the ball screw, one of the screw shaft or the nut is driven to rotate by a driving source such as a motor to move the other linearly. Most of the force is exerted on an outer portion of the nut engaging with the ball screw shaft due to an elastic deformation of the nut. In the conventional ball screw, most of the axial force is exerted on both ends of the engaging region between the screw shaft and the nut to cause nonuniformity of the load distribution in the ball screw. Thus, there arises a problem that the balls and screw shaft may be damaged in a stroke of the relative motion of the screw shaft and the nut by metal fatigue possibly caused by repetitive concentrated stress in a long term usage to shorten a life of the ball screw.

An object of the present invention is to reduce metal fatigue of a screw shaft and a nut of a ball screw to elongate a life of the ball screw.

According to one aspect of the present invention, a ball screw comprises: a screw shaft; a nut; and at least three separate trains of balls intervened between the screw shaft and the nut, wherein ball diameters of the separate trains are set to vary with a gradient such that the balls in the separate trains uniformly bear a load from the screw shaft and the nut.

According to another aspect of the present invention, a ball screw comprising: a screw shaft; a plurality of nuts joined in series to form a nut unit; and at least three trains of balls intervened between the screw shaft and the nut unit, wherein ball diameters of the respective trains are set to be varied with a gradient such that the balls in separate trains uniformly bear a load on the screw shaft and the nut.

Specifically, diameters of the balls in peripheral trains are set smaller than diameters of the balls in a central train, to thereby eliminate concentrated stress on peripheral engaging regions of the nut with the screw shaft.

Further, so as to make distribution of the load uniformly over the engaging region between the screw shaft and the nut, rigidity of the screw shaft and the nut in an axial direction thereof are set substantially equal to each other such that the balls uniformly bear a load from the screw shaft and the nut. Particularly, a deformation of the screw shaft per one pitch in an axial direction thereof when a predetermined load is exerted in the axial direction is set substantially equal to a deformation of the nut per one pitch in an axial direction thereof when the predetermined load is exerted in the axial direction. Furthermore, an area of a section of the screw shaft perpendicular to an axis thereof is set substantially equal to an area of a section of the nut perpendicular to an axis thereof.
FIG. 1 is a schematic diagram of a ball screw according to an embodiment of the present invention; and
FIG. 2 is a schematic diagram of a ball screw according to another embodiment of the present invention.

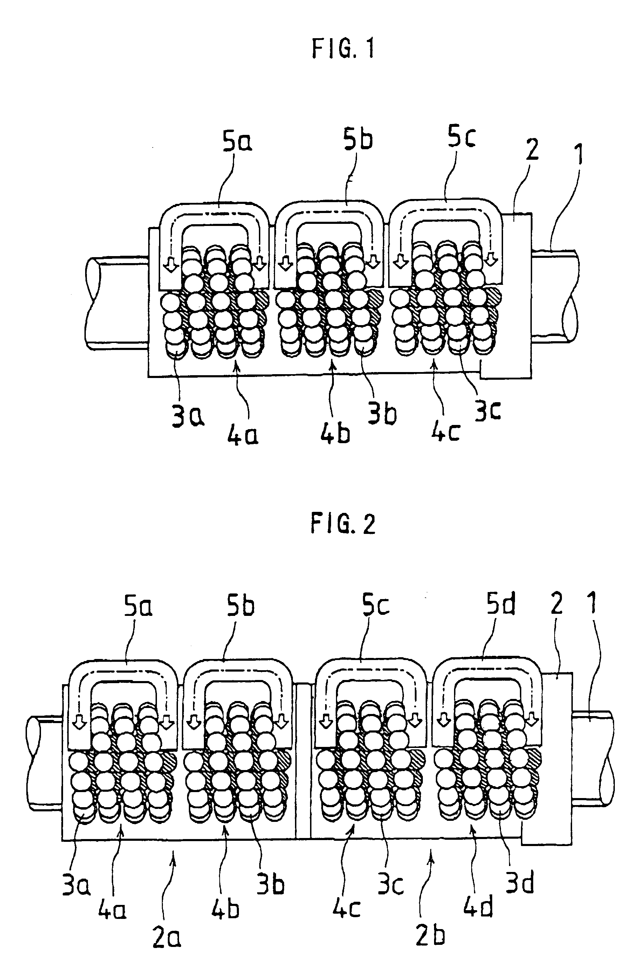

FIG. 1 shows a ball screw according to one embodiment of the present invention. In FIG. 1, a screw shaft 1 and a nut 2 are threadedly engaged with rigid steel balls intervened therebetween. In this embodiment, three ball trains 4a, 4b and 4c separately circulating around the screw shaft 1 are provided between the screw shaft 1 and the nut 2. Each of the ball trains 4a, 4b and 4c comprises a plurality of balls 3a, 3b and 3c, respectively. The ball train 4a comprises a series of balls 3a of the same diameter, and likewise the ball trains 4b and 4c comprise a series of balls 3b of the same diameter and a scries of balls 3c of the same diameter, respectively. Each ball train 4a, 4b, 4c is constrained in an endless passage formed by a male thread of the screw shaft 1, a female thread of the nut 2 and a tube 5a, 5b, 5c to circulate around the screw shaft 1. In this embodiment, each passage for the ball train 4a, 4b, 4c is provided to wind by three and a half turns between the screw shaft 1 and the nut 2 and a half turn in the tube 5a, 5b, 5c, respectively.

As described, the ball screw of this embodiment has the same basic arrangement as that of a conventional ball screw having three ball trains, but is different from the conventional one in that ball diameters of the respective ball trains are set to be varied so that a load distribution in the ball screw is made uniform. In this embodiment, diameters of the balls 3a and 3c in the both peripheral ball trains 4a and 4c are set smaller than those of the balls 3b in the central train 4b.

In a practical use of the ball screw, one of the screw shaft 1 and the nut 2 of the ball screw mechanism is connected to a drive source such as an electric motor and the other is connected to a driven element so as to move the driven element linearly by converting the rotational motion to the linear motion. For example, the screw shaft 1 is supported rotatably and unmovably in an axial direction thereof to be rotated by the motor, and the nut 2 is fixed to the driven element nonrotatably, so that the driven element is moved linearly with the nut 2 by rotating the screw shaft 1 by the motor. Alternatively, the nut 2 is supported rotatably and unmovably in the axial direction to be rotated by the motor and the screw shaft 1 is fixed to the driven body nonrotatably, so that the driven body is moved linearly with the screw shaft 1 by rotating the nut 2 by the motor. In these manners, the ball screw mechanism is used as a mechanism for converting linear motion to rotational motion and vise versa.

Since the ball screw mechanism employs a number of balls intervened between the threaded shaft 1 and the threaded nut 2 for reducing the friction therebetween and rigidities of the screw shaft 1 and the nut 2 are different from each other to make different elastic deformations when the lord is exerted thereon, the balls 3a or 3c of the peripheral train 4a or 4c bear most of the load in the conventional ball screw with all the ball diameters being set equal. Namely, the axial force is exerted to be concentrated on one of the peripheral ball trains 4a and 4c rather than the central ball train 4b, so that a concentrated stress is produced on peripheral regions ofthe nut 2 to cause nonuniformity of distribution of load on the engaging region of the screw shaft 1 and the nut 2 in the arrangement of the conventional ball screw. Therefore, the screw shaft 1 and the nut 2 tends to be damaged due to metal fatigue caused by repetitive nonuniform load distribution in a long term usage to shorten the life of the ball screw.

According to the present invention, ball diameters of the respective trains 4a, 4b, 4c are set to vary with a gradient such that the load on the screw shaft 1 and the nut 1 is evenly distributed over the balls 3a, 3b, 3c in the separate trains 4a, 4b, 4c. In this embodiment, since diameters of the balls 3a and 3c of the peripheral trains 4a and 4c are set slightly smaller than those of the balls 3b of the central train 4b, the load distribution is made uniform over the balls in the respective ball trains so that the concentrated stress in the nut 2 and the screw shaft 1 is eliminated. It should be noted that the endless passages for the ball trains 4a, 4b and 4c formed by the male threads of the screw shaft 1, the female threads of the nut 2 and the tube 5a, 5b and 5c has the same inner diameters. With this arrangement, the screw shaft I and the nut 2 are prevented from being damaged due to metal fatigue possibly caused by repetitive concentrated stress in a long term usage, to elongate a life of the ball screw.

The above first embodiment is an example of the ball screw having three ball trains 4a, 4b, 4c between the screw shaft 1 and the nut 2. The ball screw of the present invention may have more than three ball trains. In the case where more than three ball trains are provided in the ball screw, the ball diameters of the respective ball trains are set to vary to have a gradient such that the load is uniformly distributed over the respective ball trains. In particular, diameters of the balls of the peripheral trains in the axil direction are set smaller than those of the balls of the central train, so that the load distribution is made uniform to eliminate the concentrated stress in the engaging portions of the screw shaft 1 and the nut 2.

Another embodiment of a ball screw of the present invention is shown in FIG. 2. In this embodiment, two nuts 2a and 2b are joined to form a nut unit 2 engaging the screw shaft 1. Each of the two nuts 2a and 2b has two ball trains 4a, 4b and 4c, 4d, respectively. In this second embodiment, as in the first embodiment, each of the ball trains 4a, 4b, 4c and 4d circulates around the screw shaft 1 by 3.5 turns between the screw shaft and the nut 2 and 0.5 turn in the tubes 5a, 5b, 5c and 5d, respectively.

In this embodiment also, the ball diameter in each ball train is set to vary to have a gradient to make the distribution of load uniform. For this end, the balls 3a and 3d in the peripheral trains 4a and 4d have diameters smaller than those of the balls 3b and 3c in the central trains 4b and 4c. With this arrangement, the concentrated stress in the nut unit 2 and the screw shaft 1 is eliminated and the axial force interacting between the screw shaft 1 and the nut unit 2 is distributed over the engaging region of the screw shall 1 and the nut unit2, so that the screw shaft 1 and the nut unit 2 are prevented from being damaged due to metal fatigue possibly caused by repetitive concentrated stress in a long term usage, to elongate a life of the ball screw.

This second embodiment is an example in which two nuts 2a and 2b are joined to form a nut unit 2. The number of the nuts to be joined may be increased to be more than two. In those cases, diameters of the balls in the peripheral or outer trains are set smaller than those of the balls in thc central or inner trains.

Further, a ball screw of the present invention may be constituted by preparing a plurality of nuts each having only one ball train with different ball diameter, and by joining the nuts selected such that the peripheral nuts have ball diameters smaller than those of the central nut to from a nut nuit. With this arrangement, a ball screw having a uniform distribution of load is easily constituted by the combination of the different.

In the foregoing embodiments, the distribution of load is made uniform by setting ball diameters of respective ball trains to have a gradient. The distribution of load can be made uniform by selecting material and/or shapes of the screw shaft and the nut so that the rigidity of the screw shaft and the nut are equivalent to each other.

Since the nut has a diameter larger than that of the screw shaft and thus has rigidity higher than that of the screw shaft, the inner stress of the conventional ball screw tends to be nonuniform. From this view, the rigidity of the nut is made equal to that of the screw shaft in the axial direction by selecting material and shape of the screw shaft and the nut. With this arrangement, when a driving force is exerted on the screw shaft and the nut in an axial direction of the screw shaft so as to linearly move one of the screw shaft and the nut by the rotation of the other, the screw shaft and the nut are deformed elastically by the same amount so that the load is distributed uniformly over the engaging region through the balls intervened between the screw shaft and the nut. As a result, any concentrated stress is not produced and damages due to metal fatigue is latened to elongate a life of the ball screw.

The material and shape of the screw shaft and the nut are selected and designed so that a deformation amount of the screw shaft per one pitch when a predetermined load is applied to the screw in the axial direction is substantially equal to a deformation amount of the nut per one pitch when the same predetermined load is applied to the nut in the axial direction per one pitch.

Further, by forming the screw shaft and the nut with the same material and by designing the screw shaft and the nut such that areas of transverse cross sections of the screw shaft and the nut in a plane perpendicular to the axis are substantially equal to each other, the screw shaft and the nut deform equally by the same amount by the axial force, to produce uniform stress over the region of engagement of the screw shaft and the nut with the balls intervened therebetween.

According to the present invention, distribution of load in the ball screw mechanism is made uniform to prevent the concentrated stress, so that damages to the ball screw mechanism due to metal fatigue by the repetitive concentrated stress to elongate a life of the ball screw.

## Claims

1. A ball screw comprising:
a screw shaft;
a nut; and
at least three separate trains of balls intervened between said screw shaft and said nut, wherein ball diameters of the separate trains are set to vary with a gradient such that the balls in the separate trains uniformly bear a load from said screw shaft and said nut.

2. A ball screw according to claim 1, wherein diameters of the balls in peripheral trains are smaller than diameters of the balls in a central train.

3. A ball screw comprising:
a screw shaft;
a plurality of nuts joined in series to form a nut unit; and
at least three separate trains of balls intervened between said screw shaft and said nut unit, wherein ball diameters of the separate trains are set to be varied with a gradient such that the balls in the separate trains uniformly bear a load from said screw shaft and said nut.

4. A ball screw according to claim 3, wherein diameters of the balls in peripheral trains are smaller than diameters of the balls in a central train.

5. A ball screw comprising:
a screw shaft;
a nut; and
a plurality of balls intervened between said screw shaft and said nut, wherein rigidity of said screw shaft and said nut in an axial direction thereof are substantially equal to each other such that the balls uniformly bear a load from said screw shaft and said nut.

6. A ball screw comprising:
a screw shaft;
a nut; and
a plurality of balls intervened between the screw shaft and the nut, wherein a deformation of said screw shaft per one pitch in an axial direction thereof when a predetermined load is exerted in the axial direction is set substantially equal to a deformation of said nut per one pitch in an axial direction thereof when the predetermined load is exerted in the axial direction.

7. A ball screw comprising:
a screw shaft;
a nut; and
a plurality of balls intervened between the screw shaft and the nut, wherein an area of a section of said screw shaft perpendicular to an axis thereof is set substantially equal to an area of a section of said nut perpendicular to an axis thereof.
